# EUROPÄISCHE PATENTSCHRIFT

(11) **EP 4 188 635 B1**
(45) Veröffentlichungstag und Bekanntmachung des Hinweises auf die Patenterteilung: **02.10.2024**
(21) Anmeldenummer: 21745820.7
(22) Anmeldetag: 19.07.2021
(51) Int. Cl.: B23K 26/03, B23K 26/0622, B23K 26/244, B23K 26/324, B23K 31/12, B23K 103/00

(54) **VERFAHREN ZUM ÜBERWACHEN EINES LASERSCHWEISSPROZESSES ZUM VERSCHWEISSEN ZWEIER WERKSTÜCKE HINSICHTLICH EINES ÜBERBRÜCKTEN SPALTS**
METHOD FOR MONITORING A LASER WELDING PROCESS FOR WELDING TWO WORKPIECES WITH RESPECT TO A BRIDGED GAP
PROCÉDÉ DE CONTRÔLE D'UN PROCESSUS DE SOUDAGE AU LASER POUR LE SOUDAGE DE DEUX PIÈCES EN CE QUI CONCERNE UN ESPACE PONTÉ

(30) Priorität: 31.07.2020 DE 102020209700
(43) Veröffentlichungstag der Anmeldung: 07.06.2023
(73) Patentinhaber: TRUMPF Laser- und Systemtechnik SE, 71254 Ditzingen (DE)
(72) Erfinder: HESSE, Tim, 71254 Ditzingen (DE); HECKER, Sebastian, 88682 Salem (DE)
(74) Vertreter: Trumpf Patentabteilung
(86) Internationale Anmeldenummer: PCT/EP2021/070118
(87) Internationale Veröffentlichungsnummer: WO 2022/023099

(56) Entgegenhaltungen:
- EP-A1- 2 915 785
- EP-B1- 0 911 109
- DE-A1- 10 120 251
- DE-A1- 102018 128 377

## Beschreibung

Die vorliegende Erfindung betrifft ein Verfahren zum Überwachen eines Laserschweißprozesses zum Verschweißen zweier für die Laserwellenlänge transparenter Werkstücke, vorzugsweise aus Glas, wobei in den Werkstücken von einem gepulsten Laserstrahl, insbesondere Ultrakurzpulslaserstrahl, ein Schmelzvolumen im Bereich der Grenzfläche der beiden Werkstücke aufgeschmolzen wird, um eine Schweißnaht zu erzeugen, und wobei die Intensität der vom Schmelzvolumen emittierten Prozessstrahlung detektiert wird.

Ein derartiges Überwachungsverfahren ist beispielsweise durch die DE 10 2018 128 377 A1 bekannt geworden.

Die Qualitätskontrolle von zwei laserverschweißten Werkstücken aus Glas erfolgt zumeist in einem der Schweißbearbeitung nachgelagerten Arbeitsschritt. Das geschweißte Endwerkstück wird dabei oftmals einer aufwendigen manuellen Prüfung unterzogen. Ob ein Spalt überbrückt wurde oder nicht, wird mit einem Mikroskop bestimmt. Die Position und die Größe des Spalts werden bisher aufwendig nach Prozessende anhand von Querschliffen mikroskopisch untersucht. Zudem werden Festigkeitsmessungen durchgeführt.

Aus der DE 10 2018 128 377 A1 ist ein Verfahren zur Überwachung eines Schweißprozesses zum Verschweißen zweier Werkstücke aus Glas bekannt, wobei in den Werkstücken in einer mit einem gepulsten Ultrakurzpulslaserstrahl beaufschlagten Prozesszone eine Schweißnaht ausgebildet wird. Die Intensität der von der Prozesszone emittierten Prozessstrahlung wird zeitaufgelöst detektiert und die Periodizität, die Frequenz und das Frequenzspektrum von Intensitätsschwankungen der detektierten Prozessstrahlung bestimmt, um daraus auf die Qualität der erzeugten Schweißnaht zu schließen.

Der vorliegenden Erfindung stellt sich die Aufgabe, das eingangs genannte Überwachungsverfahren dahingehend weiterzubilden, dass beim Fügen transparenter Werkstücke ein überbrückter Spalt erkannt werden kann, um so festzustellen, ob eine stoffschlüssige Verbindung stattgefunden hat oder nicht.

Diese Aufgabe wird bei dem eingangs genannten Überwachungsverfahren erfindungsgemäß dadurch gelöst, dass der detektierte Intensitätsverlauf hinsichtlich mindestens eines der folgenden Merkmale ausgewertet wird:
- Tiefe eines Intensitätsabfalls, welcher durch einen Schmelzauswurf aus dem Schmelzvolumen in einen Spalt zwischen den Werkstücken verursacht ist,
- Dauer eines Intensitätsabfalls, und
- Wiederanstieg der Intensität nach einem Intensitätsabfall,
und dass anhand dieser Auswertung bestimmt wird, ob der Spalt beim Laserschweißprozess überbrückt wurde oder nicht.

Klassisch wird mittels Gaußstrahl in das Glasvolumen nahe der Grenzfläche fokussiert und ein Schmelzvolumen erzeugt. Hierbei wird insbesondere über mehrere Pulse die Absorption in Richtung der einfallenden Wellenfront gezogen, da es dort aufgrund der erhöhten Temperatur zu einer bevorzugten Absorption kommt. Durch Abschirmung variiert die longitudinale Position der lokalen Energieeinbringung somit über mehrere Pulse hinweg. Wird der Absorptionsbereich zu weit in den konvergenten Strahl verlagert, bricht die Energieeinbringung ein, und der Vorgang startet, ausgehend vom Fokus, erneut und ein weiteres Schmelzvolumen wird gebildet. Typischerweise führt dies zu modulierten Schweißnähten mit periodisch aneinander gereihten, ggf. überlappenden Schmelzvolumen (periodische Signatur). Liegt die Grenzfläche innerhalb des aufgeschmolzenen Volumens, kommt es zu einer stoffschlüssigen Verbindung. Gibt es zwischen den zu fügenden Werkstücken jedoch einen Spalt, wird durch den herrschenden Druck innerhalb der Prozesszone impulsartig Schmelze in den Spalt ausgetrieben. Wird der Spalt zwischen den Werkstücken vollständig mit Material gefüllt, sodass die Absorption im zweiten Glas fortgesetzt werden kann, kommt es zu einer stoffschlüssigen Verbindung. Die Position und die Größe des Spalts beeinflussen die Festigkeit und die Sichtbarkeit der Schweißverbindung. Verteilt sich die Schmelze jedoch weitläufig im Spalt, kann die Absorption nicht aufrechterhalten werden. Der Spalt wird nicht überbrückt, und es kommt zu keiner stoffschlüssigen Verbindung. Während der Bearbeitung emittiert die Wechselwirkungszone Prozessstrahlung mit einem kontinuierlichen Spektrum. Wird Schmelze in den Spalt ausgeworfen, verteilt sich das Material im Spalt und kühlt ab. Dies führt dazu, dass die Intensität der emittierten Prozessstrahlung einbricht und weniger Laserstrahlung absorbiert wird. Vor dem Einbruch der Strahlungsemission kann es zu einer kurzen Emissionsspitze kommen. Kann die Absorption trotz Schmelzauswurf fortgesetzt werden, nimmt die Intensität der Prozessstrahlung wieder zu und erlischt, wenn sich der Prozess zu weit in Richtung des konvergenten Strahls verlagert.

Um bereits beim Laserschweißen zu erkennen, ob ein Spalt überbrückt wurde oder nicht, werden erfindungsgemäß die Tiefe und/oder Dauer des Intensitätsabfalls und/oder der Wiederanstieg der Intensität nach einem Intensitätsabfall ausgewertet und daraus auf einen überbrückten oder nicht überbrückten Spalt geschlossen. Bricht die Intensität nicht vollständig ein und steigt erneut an, wurde der Spalt überbrückt. Bricht die Intensität vollständig ein und wird nicht fortgesetzt, wurde der Spalt nicht überbrückt. Da sich der Einbruch der Strahlungsemission gleichermaßen über das gesamte Emissionsspektrum beobachtet werden kann, ist die Detektion über einen großen Wellenlängenbereich oder wellenlängenselektiv möglich. Erfindungsgemäß kann die Auswertung anhand des detektierten Intensitätsverlaufs der einzelnen Schmelzvolumen oder anhand eines zeitlich gemittelten Intensitätsverlaufs, z.B. eines jeweils über ein Schmelzvolumen integrierten Intensitätsverlaufs, stattfinden.

Tiefe und Dauer des Intensitätsabfalls und Wiederanstieg der Intensität können unabhängig voneinander ausgewertet werden und weisen unabhängig voneinander auf einen Spalt hin. Ein Intensitätsanstieg nach dem Intensitätseinbruch deutet auf einen überbrückten Spalt hin, d.h., die Schweißnaht wird trotz Spalt im oberen Material fortgesetzt.

Vorzugsweise wird die Spaltbreite eines überbrückten Spalts, welche die Qualität der Schweißverbindung beeinflusst, anhand der Tiefe und der Dauer des Intensitätsabfalls der detektierten Prozessstrahlung ermittelt werden.

Der detektierte Intensitätsverlauf kann vorteilhaft auch zusätzlich hinsichtlich des Zeitpunkts des Intensitätsabfalls oder hinsichtlich des Zeitpunkts einer dem Intensitätsabfall vorangehenden Intensitätsspitze ausgewertet werden, um daraus die Position eines überbrückten Spalts zu ermitteln.

Weitere Vorteile und vorteilhafte Ausgestaltungen des Gegenstands der Erfindung sind der Beschreibung, den Zeichnungen und den Ansprüchen entnehmbar.

Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Vorrichtung zur Überwachung eines Laserschweißprozesses zum Verschweißen zweier Werkstücke aus Glas; und
- Fign. 2a-2f: gemessene zeitliche Intensitätsverläufe der emittierten Prozessstrahlung beim Laserschweißen zweier Werkstücke aus Quarzglas bei verschiedenen Spaltbreiten.

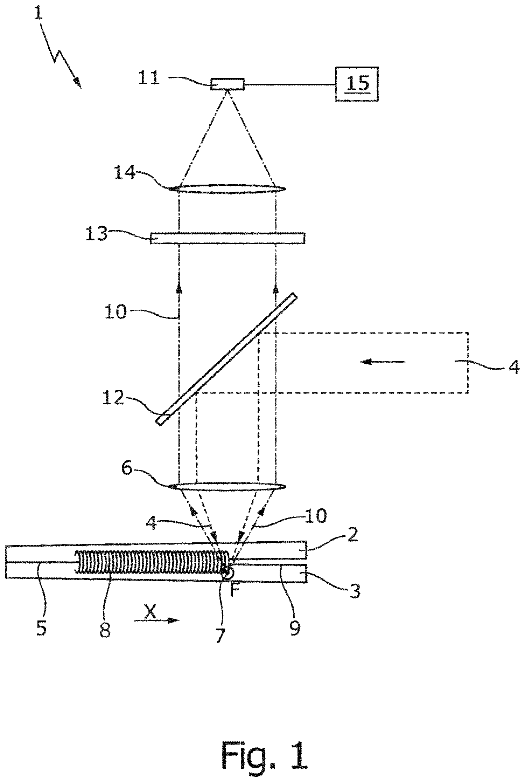

Die in **Fig. 1** schematisch gezeigte Vorrichtung **1** dient zum Überwachen eines Laserschweißprozesses zum Verschweißen zweier aufeinanderliegender, hier lediglich beispielhaft plattenförmiger Werkstücke **2, 3** aus einem für die Laserwellenlänge transparenten Material, z.B. aus Glas, mittels eines gepulsten Laserstrahls **4.** Als gepulster Laserstrahl 4 wird bevorzugt ein Ultrakurzpulslaserstrahl mit Pulsen im Femto- oder Pikosekundenbereich und mit Frequenzen der Repetitionsraten von 100kHz bis zu mehreren MHz verwendet.

Die Unterseite des in Fig. 1 oberen Werkstücks 2 und die Oberseite des unteren Werkstücks 3 liegen aneinander an und bilden eine Grenzfläche **5,** in der die Verschweißung vorgenommen werden soll bzw. vorgenommen wurde. Der Laserstrahl 4 wird von einer Bearbeitungsoptik **6** durch das obere Werkstück 2 hindurch in das untere Werkstück 3 nahe der Grenzfläche 5 fokussiert, um dort ein Schmelzvolumen **7** zu erzeugen. Bevorzugt wird ein Ultrakurzpulslaser verwendet, dessen mittlere Leistung zeitlich moduliert wird. Vorzugsweise werden die Bearbeitungsparameter so gewählt, dass mit jeder Modulationsperiode ein einzelnes Schmelzvolumen 7 erzeugt wird.

Durch die dabei sehr hohen erreichbaren Intensitäten im Fokus **F** treten im Glasmaterial nichtlineare Absorptionseffekte auf. Bei geeigneten Repetitionsraten des gepulsten Laserstrahls 4 kommt es zu Wärmeakkumulationseffekten im Glasmaterial, wodurch es zu einem lokalen Aufschmelzen des Glasmaterials kommt. Das Schmelzvolumen 7 wird entsprechend so in die Werkstücke 2, 3 gelegt, dass es nahe der Grenzfläche 5 angeordnet ist oder die Grenzfläche 5 umfasst. Beim erneuten Erstarren des vormals aufgeschmolzenen Materials findet eine stoffschlüssige Verschweißung der Werkstücke 2, 3 statt. Der Laserstrahl 4 wird gemeinsam mit der Bearbeitungsoptik 6 in einer Vorschubrichtung **X** relativ den Werkstücken 2, 3 bewegt, um in den Werkstücken 2, 3 eine Schweißnaht **8** einzuziehen.

Insbesondere über mehrere Pulse wird die Absorption im unteren Werkstück 3 in Richtung des einfallenden Laserstrahls 4 gezogen, da es dort aufgrund der erhöhten Temperatur zu einer bevorzugten Absorption kommt. Durch Abschirmung variiert die longitudinale Position der lokalen Energieeinbringung somit über mehrere Pulse hinweg. Wird der Absorptionsbereich zu weit in den konvergenten Strahl verlagert, bricht die Energieeinbringung ein, und der Vorgang startet, ausgehend vom Fokus F, erneut. Typischerweise führt dies zu modulierten Schweißnähten 8 mit periodischer Signatur.

Liegt die Grenzfläche 5 innerhalb des aufgeschmolzenen Schmelzvolumens 7, kommt es zu einer stoffschlüssigen Verbindung. Gibt es zwischen den zu fügenden Werkstücken 2, 3 einen Spalt **9,** wird durch den herrschenden Druck innerhalb der Prozesszone impulsartig Schmelze in den Spalt 9 ausgetrieben. Wird der Spalt 9 zwischen Werkstücken 2, 3 vollständig mit Material gefüllt, sodass die Absorption im oberen Werkstück 2 fortgesetzt werden kann, kommt es zu einer stoffschlüssigen Verbindung. Verteilt sich die Schmelze jedoch weitläufig im Spalt 9, kann die Absorption nicht aufrechterhalten werden. Der Spalt 9 wird nicht überbrückt, und es kommt zu keiner stoffschlüssigen Verbindung. Die Position und die Größe des Spalts 9 beeinflussen die Festigkeit und die Sichtbarkeit der Schweißverbindung und wirken sich auch auf die Intensität der während des Prozesses von der Wechselwirkungszone des Laserstrahls 4 im Werkstück 2, 3 emittierten Prozessstrahlung **10** aus.

Die Intensität der emittierten Prozessstrahlung 10 erfolgt durch einen bevorzugt koaxial zum Laserstrahl 4 angeordneten Detektor, hier in Form einer Photodiode **11.** Alternativ kann der Detektor auch neben der Bearbeitungsoptik 6 oder unterhalb der Werkstücke 2, 3 angebracht sein ("off-axis"). Statt mit einer Photodiode kann die Detektion der emittierten Prozessstrahlung 10 auch mit einem schnellen Zeilensensor oder einer Kamera erfolgen.

Der Laserstrahl 4 wird mit einem dichroitischen Spiegel **12,** der beispielsweise hochreflektierend für die Laserwellenlänge und transmittierend für Strahlung im sichtbaren Wellenlängenbereich von 300 bis 800 nm ist, zur Bearbeitungsoptik 6 geführt und im unteren Werkstück 3 kurz unterhalb der Grenzfläche 5 fokussiert. Alternativ kann der dichroitische Spiegel 12 auch transmissiv für die Laserwellenlänge und reflektiv für die Prozessstrahlung 10 sein. Statt oder zusätzlich zum sichtbaren Wellenlängenbereich kann die Beobachtung der Prozessstrahlung 10 auch im infraroten Wellenlängenbereich erfolgen. Die dabei von der Prozesszone der Werkstücke 2, 3 emittierte Prozessstrahlung 10 wird mithilfe der Bearbeitungsoptik 6 eingefangen und durch den dichroitischen Spiegel 12 aus dem Laserstrahlenstrahlengang ausgekoppelt. Ein optisches Filterelement **13** dient zur Selektion eines gewünschten Wellenlängenbereiches und/oder zur Unterdrückung reflektierter Laserstrahlung aus der Prozessstrahlung 10. Im Anschluss an das Filterelement 13 wird die Prozessstrahlung 10, z.B. mit einer Linse **14,** auf die Photodiode 11 fokussiert. Mithilfe einer Überwachungseinheit **15** wird der zeitliche Intensitätsverlauf der emittierten Prozessstrahlung 10 für jedes erzeugte Schmelzvolumen auf eine Änderung in der Strahlungsintensität hin ausgewertet, die auf einen überbrückten Spalt schließen lässt.

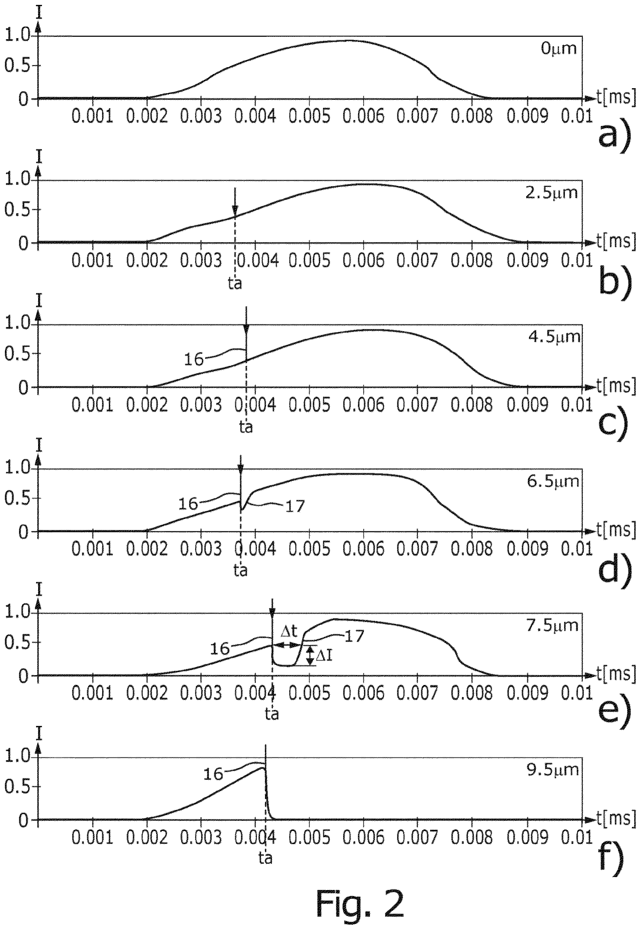

**Fign. 2a-2f** zeigen exemplarische zeitliche Intensitätsverläufe I(t) der emittierten Prozessstrahlung 10 beim Laserschweißen zweier Werkstücke 2, 3 aus Quarzglas bei verschiedenen Spaltbreiten. Während der Laserbearbeitung wird Prozessstrahlung 10 mit einem kontinuierlichen Spektrum emittiert. Fig. 2a zeigt den Intensitätsverlauf, wenn zwischen den beiden Werkstücken 2, 3 kein Spalt vorhanden ist, die Spaltbreite also 0 µm beträgt. Fign. 2b-2f zeigen die Intensitätsverläufe für unterschiedliche Spaltbreiten zwischen 2,5 µm und 9,5 µm. Wird Schmelze in einen Spalt 9 ausgeworfen, verteilt sich das Material im Spalt 9 und kühlt ab. Dies führt dazu, dass die Intensität der Prozessstrahlung 10 zu einem Zeitpunkt **t**_{A} einbricht und weniger Laserstrahlung absorbiert wird. Wird der Spalt 9 zwischen Werkstücken 2, 3 vollständig mit Material gefüllt, kann die Absorption im oberen Werkstück 2 fortgesetzt werden, d.h. die Intensität fällt nicht bis auf null ab und steigt erneut an, wodurch der Spalt 9 überbrückt wird (Fign. 2a-2e). Bricht hingegen, wie in Fig. 2f gezeigt, die Intensität vollständig ein und steigt nicht wieder an, wurde der Spalt 9 nicht überbrückt. Vor dem Einbruch der Prozessstrahlung 10 kommt es zu einer kurzen Emissionsspitze bzw. Intensitätsspitze **16.**

Anhand des gemessenen Zeitpunkts t_{A} kann auf die Position des Spalts 9 innerhalb des Schmelzvolumens geschlossen werden. Je später der Schmelzauswurf stattfindet, desto höher liegt der Spalt 9 innerhalb des erzeugten Schmelzvolumens 7. Basierend auf der Tiefe **Δl** des Intensitätsabfalls und der zeitlichen Dauer **Δt** des Intensitätsabfalls kann zudem die Größe des überbrückten Spalts 9 abgeschätzt werden. Je stärker die Intensität einbricht und je länger es dauert, bis die Prozessstrahlung 10 wieder ansteigt, desto größer ist der überbrückte Spalt 9. Ein in Fign. 2d und 2e gezeigter Intensitätsanstieg **17** nach dem Intensitätseinbruch deutet auf einen überbrückten Spalt 9 hin, d.h., die Schweißnaht 8 wird trotz Spalt 9 im oberen Werkstück 2 fortgesetzt. Mithilfe des beschriebenen Verfahrens kann die Qualitätsprüfung von Schweißverbindungen im industriellen Maßstab direkt während der Bearbeitung erfolgen, wodurch eine dem Prozess nachgelagerte, aufwendige manuelle Prüfung entfallen kann.

## Patentansprüche

1. Verfahren zum Überwachen eines Laserschweißprozesses zum Verschwei-ßen zweier für die Laserwellenlänge transparenter Werkstücke (2, 3), vorzugsweise aus Glas, wobei in den Werkstücken (1, 2) von einem gepulsten Laserstrahl (4), insbesondere Ultrakurzpulslaserstrahl, ein Schmelzvolumen (7) im Bereich der Grenzfläche (5) der beiden Werkstücke (2, 3) aufgeschmolzen wird, um eine Schweißnaht (8) zu erzeugen, und wobei die Intensität der vom Schmelzvolumen (7) emittierten Prozessstrahlung (10) detektiert wird,
**dadurch gekennzeichnet,**
**dass** der detektierte Intensitätsverlauf hinsichtlich mindestens eines der folgenden Merkmale ausgewertet wird:
- Tiefe (Δl) eines Intensitätsabfalls,
- Dauer (Δt) eines Intensitätsabfalls, und
- Wiederanstieg (17) der Intensität nach einem Intensitätsabfall,
und **dass** anhand dieser Auswertung bestimmt wird, ob der Spalt (9) beim Laserschweißprozess überbrückt wurde oder nicht.

2. Verfahren nach Anspruch 1, **dadurch gekennzeichnet, dass** anhand der ausgewerteten Dauer (Δt) des Intensitätsabfalls die Breite eines überbrückten Spalts (9) ermittelt wird.

3. Verfahren nach Anspruch 1 oder 2, **dadurch gekennzeichnet, dass** der detektierte Intensitätsverlauf zusätzlich hinsichtlich des Zeitpunkts (t_{A}) des Intensitätsabfalls ausgewertet wird und anhand dieser zusätzlichen Auswertung die Position eines überbrückten Spalts (9) ermittelt wird.

4. Verfahren nach einem der vorhergehenden Ansprüche, **dadurch gekennzeichnet, dass** der detektierte Intensitätsverlauf hinsichtlich des Zeitpunkts einer dem Intensitätsabfall vorangehenden Intensitätsspitze (16) ausgewertet wird und anhand dieser zusätzlichen Auswertung die Position eines überbrückten Spalts (9) oder eines nicht überbrückten Spaltes (9) ermittelt wird.

5. Verfahren nach einem der vorhergehenden Ansprüche, **dadurch gekennzeichnet, dass** die mittlere Laserleistung des Laserstrahls (4) moduliert wird.

## Claims

1. A method for monitoring a laser welding process for welding two workpieces (2, 3), preferably glass workpieces, which are transparent to the laser wavelength, wherein in the workpieces (1, 2), a melt volume (7) is melted by a pulsed laser beam (4), in particular an ultra-short-pulse laser beam, near the boundary surface (5) between the two workpieces (2, 3) in order to produce a weld seam (8), and wherein the intensity of the process radiation (10) emitted by the melt volume (7) is detected,
**characterized in that**
the detected intensity profile is evaluated with respect to at least one of the following features:
- depth (Δl) of an intensity drop,
- duration (Δt) of an intensity drop, and
- renewed increase (17) of the intensity following an intensity drop, and that this evaluation is used to determine whether the gap (9) had been bridged or not during the laser welding process.

2. The method according to claim 1, **characterized in that** the width of a bridged gap (9) is ascertained using the evaluated duration (Δt) of the intensity drop.

3. The method according to claim 1 or 2, **characterized in that** the detected intensity profile is also evaluated with respect to the time (t_{A}) of the intensity drop, and that the position of a bridged gap (9) is ascertained on the basis of this additional evaluation.

4. The method according to one of the preceding claims, **characterized in that** the detected intensity profile is evaluated with respect to the time of an intensity peak (16) preceding the intensity drop, and the position of a bridged gap (9) or an unbridged gap (9) is ascertained on the basis of this additional evaluation.

5. The method according to one of the preceding claims, **characterized in that** the average laser output of the laser beam (4) is modulated.

## Revendications

1. Procédé de surveillance d'un processus de soudage au laser pour le soudage de deux pièces (2, 3) transparentes à la longueur d'onde du laser, de préférence en verre, dans lequel, au sein des pièces (1, 2), un volume de fusion (7) est mis en fusion au moyen d'un faisceau laser pulsé (4), en particulier d'un faisceau laser à impulsions ultracourtes, au niveau de la zone de l'interface (5) des deux pièces (2, 3), afin de produire un cordon de soudure (8), et dans lequel l'intensité du rayonnement de processus (10) émis par le volume de fusion (7) est détectée,
**caractérisé en ce que**,
la courbe d'intensité détectée est évaluée en fonction d'au moins une des caractéristiques suivantes :
- la profondeur (Δl) d'une chute d'intensité,
- la durée (Δt) d'une chute d'intensité, et
- la remontée (17) de l'intensité après une chute d'intensité, et **en ce que** cette évaluation permet de déterminer si l'interstice (9) a été comblé ou non lors du processus de soudage au laser.

2. Procédé selon la revendication 1, **caractérisé en ce que** la largeur d'un interstice (9) comblé est déterminée en fonction de la durée (Δt) de la chute d'intensité évaluée.

3. Procédé selon la revendication 1 ou 2, **caractérisé en ce que** la courbe d'intensité détectée est également évaluée en fonction du moment (t_{A}) de la chute d'intensité et **en ce que** cette évaluation supplémentaire permet de déterminer la position d'un interstice (9) comblé.

4. Procédé selon l'une des revendications précédentes, **caractérisé en ce que** la courbe d'intensité détectée est évaluée en fonction du moment d'un pic d'intensité (16) précédant la chute d'intensité et **en ce que** cette évaluation supplémentaire permet de déterminer la position d'un interstice (9) comblé ou d'un interstice (9) non comblé.

5. Procédé selon l'une des revendications précédentes, **caractérisé en ce que** la puissance laser moyenne du faisceau laser (4) est modulée.
